# EUROPÄISCHE PATENTSCHRIFT

(11) **EP 3 627 256 B1**
(45) Veröffentlichungstag und Bekanntmachung des Hinweises auf die Patenterteilung: **29.06.2022**
(21) Anmeldenummer: 19192947.0
(22) Anmeldetag: 21.08.2019
(51) Int. Cl.: G05B 19/4099

(54) **COMPUTERGESTÜTZTES VERFAHREN FÜR DIE PUNZIERUNG EINER OBERFLÄCHE EINES WERKSTÜCKS SOWIE EINE ENTSPRECHENDE VORRICHTUNG**
COMPUTER-AIDED METHOD FOR PUNCHING A SURFACE OF A WORKPIECE AND CORRESPONDING DEVICE
PROCÉDÉ ASSISTÉ PAR ORDINATEUR POUR LE POINÇONNAGE D'UNE SURFACE D'UNE PIÈCE AINSI QUE DISPOSITIF CORRESPONDANT

(30) Priorität: 27.08.2018 DE 102018120813
(43) Veröffentlichungstag der Anmeldung: 25.03.2020
(73) Patentinhaber: MEISSNER AG MODELL- UND WERKZEUGFABRIK, 35216 Biedenkopf-Wallau (DE)
(72) Erfinder: Koch, Stephan Frank, 57334 Bad Laasphe (DE); Flötzinger, Ulrich, 57334 Bad Laasphe (DE)
(74) Vertreter: Angerhausen, Christoph

(56) Entgegenhaltungen:
- DE-U1-202006 010 914
- DE-U1-202017 103 704
- US-A1- 2013 150 994

## Beschreibung

Die Erfindung betrifft ein computergestütztes Verfahren für die Punzierung einer Oberfläche eines Werkstücks sowie eine entsprechende Vorrichtung. Ein Verfahren zum Erzeugen von Steuerbefehlen für eine NC-Steuerung zum Schnitzen eines dreidimensionalen Musters ist in der US 2013/0150994 A1 offenbart. Dabei wird ein polygonales Modell des Musters in ein Spline-Modell umgewandelt. Anschließend werden Steuerbefehle erzeugt, um das Muster basierend auf dem Spline-Modell mittels einer Schnitzmaschine zu schnitzen. Eine Vorrichtung für die Punzierung einer Oberfläche ist aus der DE 20 2017 103704 U1 bekannt.

Um Kunststoffformteilen, etwa Formteilen aus vulkanisiertem Gummi, wie sie beispielsweise im KFZ- und Interieurbereich verwendet werden, ein hochwertiges Erscheinungsbild zu verleihen, ist es gang und gäbe, dass diese eine willkürlich genarbte oder strukturierte Oberfläche aufweisen. Dazu muss in entsprechenden Formwerkzeugen zur Herstellung der Formteile ein Negativ der gewünschten Oberflächenstruktur in einer korrespondierenden Formoberfläche hergestellt werden. Derartige Oberflächenstrukturen werden beispielsweise durch Punzen des Formwerkzeugs hergestellt. Beim Punzen wird eine Punze auf die Oberfläche des Werkzeugs aufgesetzt und mit einem Hammerschlag eine Vertiefung in die Oberfläche eingebracht. Das Punzen findet in Handarbeit statt und erfordert viel Erfahrung, um eine gleichmäßige und dennoch möglichst willkürlich erscheinende, das heißt unregelmäßige Oberflächenstruktur zu erzeugen.

Ein Lösungsvorschlag zur Umgehung des manuellen Punzierens wird in der DE 20 2006 010 914 U1 beschrieben. Demgemäß wird ein Formwerkzeug zur Herstellung eines Kunststoffformteils vorgeschlagen, wobei das Werkzeug eine strukturierte Formfläche aufweist, die durch Kugelstrahlen bearbeitet ist. Ein ähnliches Verfahren zur Herstellung einer Oberflächenstruktur von Prägewalzen ist in der EP 0 279 773 A2 beschrieben.

Die aus dem Stand der Technik bekannten Kugelstrahlverfahren haben den Nachteil, dass das behandelte Werkstück hohen mechanischen Belastungen ausgesetzt ist, die zur Erosion des Werkstücks führen können, und die erzeugten Oberflächenstrukturen häufig nicht den geforderten ästhetischen Ansprüchen genügen.

Es ist daher die Aufgabe der Erfindung, ein Verfahren für die Punzierung einer Oberfläche eines Werkstücks bereit zu stellen, welches reproduzierbare und hohen ästhetischen Anforderungen genügende Oberflächenstrukturen bei gleichzeitig möglichst geringem technischen und Zeitaufwand erzeugt.

Diese Aufgabe wird durch ein Verfahren mit den Merkmalen des Anspruchs 1 gelöst.

Der nebengeordnete Anspruch 14 betrifft eine entsprechende Vorrichtung. Vorteilhafte Ausführungsformen der Erfindung sind jeweils Gegenstand der abhängigen Ansprüche.

Demgemäß wird ein computergestütztes Verfahren für die Punzierung einer Oberfläche eines Werkstücks vorgeschlagen, das die Schritte aufweist:
- Bereitstellen eines geometrischen Modells eines Werkstücks, das mindestens eine mit einer Vielzahl Punzierungen zu versehende Oberfläche aufweist, in einem Computersystem;
- Erzeugen einer Punktewolke mit dem Computersystem, die eine Vielzahl Punkte auf einer Fläche des geometrischen Modells aufweist, die die mit der Vielzahl Punzierungen zu versehende Oberfläche des Werkstücks repräsentiert;
- Erzeugen von Steuerbefehlen mit dem Computersystem für eine NC-Steuerung einer Vorrichtung zur Punzierung eines Werkstücks, wobei jedem Punkt der Vielzahl Punkte auf der Fläche des geometrischen Modells jeweils mindestens ein Punzbearbeitungsschritt zugeordnet wird;
- Bereitstellen eines Werkstücks entsprechend dem geometrischen Modell, das die mit einer Vielzahl Punzierungen zu versehende Oberfläche aufweist, sowie einer Vorrichtung zur Punzierung des Werkstücks; und
- Ausführen der Punzbearbeitungsschritte mit der Vorrichtung an Positionen auf der Oberfläche des Werkstücks, die jeweils einem der Punkte der Vielzahl Punkte auf der Fläche des geometrischen Modells entsprechen.

Die Erfindung ist dadurch gekennzeichnet, dass das Erzeugen einer Punktewolke folgende Schritte aufweist:
- Auswählen eines potentiellen Punzpunkts, wobei der potentielle Punzpunkt einem noch nicht der Punktewolke zugeordneten Knotenpunkt eines Gitters entspricht, wobei das Gitter an einer Außenseite der Fläche des geometrischen Modells angeordnet ist;
- Platzieren einer Projektion der zu erzeugenden Punzierung an dem potentiellen Punzpunkt, so dass der potentielle Punzpunkt mit einem charakteristischen Punkt der Projektion, insbesondere dem geometrischen Schwerpunkt, zusammenfällt oder relativ zu diesem angeordnet bestimmt ist, wobei die Projektion einer mit der Vorrichtung zu erzeugenden Punzierung entspricht;
- Zuordnen des potentiellen Punzpunkts zu der Punktewolke;
- Wiederholen der Schritte des Auswählens eines potentiellen Punzpunkts, des Platzierens der Projektion und des Zuordnens des potentiellen Punzpunkts zu der Punktewolke, bis entweder alle Knotenpunkte des Gitters mindestens einmal ausgewählt worden sind oder eine Abbruchbedingung erfüllt ist.

Die Erfindung macht sich zu Nutze, dass viele Werkstücke, insbesondere Werkzeuge, heutzutage häufig ohnehin computergestützt konstruiert werden und somit bereits vor der Punzierung der Oberfläche des Werkstücks ein geometrisches Modell des Werkstücks vorliegt, das die noch nicht punzierte Oberfläche aufweist. Ebenso ist es mit gängigen Methoden der Datenverarbeitung möglich, eine Punktwolke auf die mit der Vielzahl von Punzierungen zu versehende Oberfläche zu legen, oder die Oberfläche als eine Punktwolke darzustellen. Eine Punktwolke im Sinne der Erfindung ist eine Menge von Punkten eines Vektorraums, die eine unorganisierte räumliche Struktur aufweist. Eine Punktwolke ist durch die enthaltenden Punkte beschrieben, die jeweils durch Ihre Raumkoordinaten erfasst sind. Zu den Punkten können zusätzliche Attribute wie zum Beispiel die Punzierung betreffende Parameter, beispielsweise Auswahl und Ausrichtung des Punzmeißels, erfasst sein. Das Erstellen und Darstellen von Flächen anhand von Punktwolkendaten ist aus dem Stand der Technik hinreichend bekannt. Durch Variation der Detailgenauigkeit der Punktwolke kann die Dichte der Punkte auf ein Maß eingestellt werden, das einer gewünschten Punzierungsdichte entspricht.

Wenn nunmehr jedem Punkt auf der Fläche des geometrischen Modells oder zumindest einer Vielzahl dieser Punkte ein Punzbearbeitungsschritt zugeordnet wird, so kann daraus ein Maschinensteuerungsprogramm, beispielsweise eine NC-Steuerung für einen Mehrachsroboter, erzeugt werden, mit Hilfe welches die Punzbearbeitungsschritte an Positionen auf der Oberfläche des Werkstücks ausgeführt werden, die jeweils einem der Punkte der Punktwolke auf der Fläche des geometrischen Modells entsprechen. Jedem Punzbearbeitungsschritt können außer der Position auf der Oberfläche des Werkstücks weitere Attribute zugeordnet sein, beispielsweise die Auswahl einer Punze, die Ausrichtung der Punze in Bezug auf die Oberfläche des Werkstücks, eine Punzstärke und dergleichen.

Das Ausführen des Punzbearbeitungsschritts kann jeweils das Punzieren des Werkstücks mit mindestens einer Punze aufweisen. Dabei können eine Mehrzahl der Punzbearbeitungsschritte mit derselben Punze durchgeführt werden, deren das Werkstück bearbeitende Ende im Querschnitt senkrecht zu Längsrichtung der Punze eine von der Kreissymmetrie abweichenden Geometrie und vorzugsweise eine Ovalität aufweist.

Bei dem Ausführen des Punzbearbeitungsschritts kann eine Punzierung auf der Oberfläche des Werkstücks erzeugt werden, die eine Tiefe von beispielsweise 0,6 mm aufweist.

Die Punze kann für jeden der Positionen auf der Oberfläche des Werkstücks vor dem Punzieren auf jeweils einen bestimmten Drehwinkel α um die Längsachse der Punze mit o° ≤ α ≤ 360° eingestellt werden.

Das Computersystem kann einen Zufallsgenerator aufweisen, der zumindest für eine Mehrzahl der Vielzahl Punkte jeweils eine Zufallszahl zwischen 0 und 360 erzeugt, die als der Drehwinkel α um die Längsachse der Punze festgesetzt wird. Dabei kann der jeweilige Drehwinkel α für jeden der Mehrzahl Punkte in den erzeugten Steuerbefehlen hinterlegt werden.

Das Ausführen der Punzbearbeitungsschritte kann umfassen, dass eine Punze schrittweise auf einem Bearbeitungsweg entlang der Oberfläche des Werkstücks geführt wird. Entlang des Bearbeitungswegs kann insbesondere vorgesehen sein, dass jede Punzierung eine zufällige Orientierung in Bezug auf eine vorangegangene Punzierung einnimmt. Die Änderung der Orientierung kann insbesondere eine Änderung des Drehwinkels α um die senkrecht zur Oberfläche stehenden Längsachse der Punze umfassen. Dabei kann die Änderung zwischen aufeinander folgenden Punzierungen vorzugsweise einen zufälligen Wert zwischen 45° und 135° aufweisen.

Die Punze kann unter einem Winkel β mit 0° ≤ β ≤ 89° zu der Normalen der Oberfläche in das Werkstück geschlagen werden, wobei das Computersystem einen Zufallsgenerator aufweist, der zumindest für eine Mehrzahl der Vielzahl Punkte jeweils eine Zufallszahl zwischen 0 und 89 erzeugt, die als der Winkel β für jeden der Mehrzahl Punkte in den erzeugten Steuerbefehlen hinterlegt wird. Das Punzieren des Werkstücks kann für jede der Positionen auf der Oberfläche das Auswählen einer der mindestens zwei Punzen aufweisen, wozu das Computersystem einen Zufallsgenerator aufweist, der für die den Positionen auf der Oberfläche entsprechenden Punkte auf der Oberfläche des geometrischen Modells zufällig eine der beiden Punzen auswählt, woraufhin die jeweils getroffene Auswahl in den erzeugten Steuerbefehlen hinterlegt wird.

Bei einer Ausführungsform der Erfindung kann vorgesehen sein, dass ein Zufallsgenerator dazu eingerichtet ist, für zumindest einen Teil der Punzbearbeitungsschritte einen Offset zufällig zu bestimmen, um welchen die Position der Punze auf der Oberfläche des Werkstücks gegenüber dem korrespondierenden Punkt auf der Fläche des geometrischen Modells verlagert wird. Auch diese Maßnahme trägt dazu bei, dass die strukturierte Oberfläche des Werkstücks 2 ein unregelmäßiges Erscheinungsbild aufweist.

Die Projektion der zu erzeugenden Punzierung kann einem Querschnitt der zu erzeugenden Punzierung entsprechen. Der Querschnitt kann senkrecht zu der zu erzeugenden Punzierung ausgerichtet sein. Insbesondere kann der Umfang der Projektion dem Umfang der zu erzeugenden Punzierung entsprechen. Die Projektion kann z.B. eine zumindest teilweise kreisförmige, ellipsenförmige, dreieckige, rechteckige, polygonale oder eine andere Form aufweisen. Die Projektion kann insbesondere einem Querschnitt senkrecht zur Längsrichtung des für die Punzierung verwendeten Werkzeugs entsprechen. Die Projektion kann aber auch dreidimensional sein. Die Projektion entspricht der zu erzeugenden Punzierung . Die Projektion kann insbesondere zumindest teilweise dem Werkzeug, vorteilhafterweise dem die Punzierung erzeugenden Werkzeugkopf, entsprechen. Die Projektion kann z.B. eine zumindest teilweise kegelförmige, kegelstumpfförmige, pyramidenförmige, pyramidenstumpfförmige, ellipsoide, kugelförmige, quaderförmige, prismenförmige Form oder dergleichen aufweisen.

Es kann vorgesehen sein, die Projektion nach Zuordnen des potentiellen Punzpunkts zu der Punktewolke und vor einem Wiederholen des Auswählens eines potentiellen Punzpunkts zu ändern. Beispielsweise kann nach dem Platzieren einer ellipsenförmigen Projektion eine kreisförmige Projektion gewählt werden, so dass die nächste platzierte Projektion kugelförmig ist.

Die Projektion kann derart platziert werden, dass ein charakteristischer Punkt der Projektion mit dem potentiellen Punzpunkt zusammenfällt. Der charakteristische Punkt kann der geometrische Schwerpunkt der Projektion sein. Es kann aber auch vorgesehen sein, dass bei dem Platzieren ein anderer charakteristischer Punkt, beispielsweise ein Mittelpunkt, ein Schnittpunkt von Winkelhalbierenden oder Mittelsenkrechten, ein Fokalpunkt oder dergleichen mit dem potentiellen Punkpunkt zusammenfällt. Es kann auch vorgesehen sein, dass die Projektion derart platziert wird, dass der charakteristische Punkt relativ zu dem potentiellen Punzpunkt beabstandet ist, z.B. einen Offset aufweist. Der Offset kann jeweils zufällig bestimmt werden, fest vorgegeben sein oder Regelmäßigkeiten unterliegen.

Die der Punktewolke zugeordneten potentiellen Punzpunkte können bevorzugt der Vielzahl der Punkte der Punktewolke entsprechen und/oder mit diesen identisch sein. Es kann aber auch vorgesehen sein, dass der Vielzahl der Punkte der Punktewolke nach dem Erzeugen der Punktewolke weitere Punkte zugeordnet werden, an denen Punzierungen erzeugt werden können. Beispielsweise können die weiteren Punkte von einem Benutzer nach erzeugen der Punktewolke "manuell" hinzugefügt werden, z.B. über ein geeignetes GUI. Über das GUI kann der Benutzer in einigen Ausführungsformen auch Projektionen platzieren und/oder bereits platzierte Projektionen verschieben oder drehen. Es kann vorgesehen sein, dass der Benutzer durch das GUI sämtliche nachfolgend beschriebenen Schritte, Variationen oder Möglichkeiten zumindest teilweise "manuell" durchführen kann. Es kann vorgesehen sein, dass der Benutzer nach Erzeugen der Punktewolke durch das erfindungsgemäße Verfahren die erzeugte Punktewolke und/oder die platzierten Projektionen bestätigen muss. Damit kann der Benutzer die erzeugte Punktewolke und/oder die platzierten Projektionen kontrollieren und gegebenenfalls abändern.

Das Gitter kann regelmäßig oder unregelmäßig sein. Das Gitter kann strukturiert oder unstrukturiert sein. Das Gitter kann kartesisch, gekrümmt oder rechtwinklig sein. Das Gitter kann an die Form des geometrischen Modells zumindest teilweise angepasst sein oder diese zumindest teilweise repräsentieren. Das Gitter kann adaptiv während des Verfahrens verändert werden. Insbesondere kann das Gitter verfeinert oder vergröbert werden und/oder die Knotenpunkte des Gitters können verschoben werden. Gegebenenfalls kann das Gitter auch mehrmals adaptiert werden. Die Gitterzellen können dreieckförmig, viereckförmig oder mehrpolygonal sein; die jeweiligen Gitterzellen müssen nicht identisch sein, d.h. mindestens eine Gitterzelle kann eine von mindestens einer anderen Gitterzelle verschiedene Anzahl Knotenpunkte haben.

Es kann vorgesehen sein, dass der potentielle Punzpunkt nicht mit einem Knotenpunkt, sondern mit einem Punkt in einer Gitterzelle, beispielsweise dem geometrischen Schwerpunkt der Gitterzelle, zusammenfällt. Die Schritte des Auswählens eines potentiellen Punzpunkts, des Platzierens der Projektion und des Zuordnens des potentiellen Punzpunkts zu der Punktewolke, können dann wiederholt werden, bis entweder jede Gitterzelle auf ein Platzieren eines potentiellen Punzpunkts geprüft ist oder eine Abbruchbedingung erfüllt ist. Die nachfolgend beschriebenen weiteren Ausführungsformen können analog mit Bezug auf den Punkt in der Gitterzelle anstatt des Knotenpunkts verwirklicht sein.

Es kann vorgesehen sein, nach dem Zuordnen des potentiellen Punzpunkts zu der Punktewolke und vor einem Wiederholen des Auswählens eines potentiellen Punzpunkts die Punzierung an dem zugeordneten Punzpunkt durch das Werkzeug durchzuführen. Damit kann bereits während des Erzeugens der Punktewolke das zu punzierende Werkstück punziert werden.

In einer weiteren Ausführungsform der Erfindung kann das Gitter entweder vor dem des Auswählen eines potentiellen Punzpunkts erzeugt werden oder zumindest teilweise dem geometrischen Modell entsprechen. Insbesondere wenn das geometrische Modell ein Mesh aufweist, kann dieses mit dem bei dem Auswählen des potentiellen Punzpunkts verwendeten Gitter zumindest teilweise identisch sein. Das Gitter kann auch vor dem Schritt des Erzeugens einer Punktewolke oder vor der Durchführung des erfindungsgemäßen Verfahrens erzeugt worden sein.

Es kann vorgesehen sein, dass bei dem Platzieren der Projektion die zu platzierende Projektion auf ein Überlappen mit bereits vorher platzierten Projektionen überprüft werden kann und in dem Schritt des Platzierens der Projektion die zu platzierende Projektion nur dann an dem potentiellen Punzpunkt platziert und in dem Schritt des Zuordnens des potentiellen Punzpunkts der potentielle Punzpunkt nur dann der Punktewolke zugeordnet werden kann, wenn kein Überlappen festgestellt wird. Beispielhaft kann das Überlappen durch Schnittmengenbildung der jeweiligen Projektionen überprüft werden. Wird das Überlappen durch Schnittmengenbildung überprüft, so kann vorgesehen sein, ein Überlappen erst dann festzustellen, wenn ein Schwellwert überschritten ist. Beispielsweise kann der Schwellwert einem Prozentwert der überlappenden Fläche oder des überlappenden Volumens bezogen auf z.B. die addierte Fläche oder Volumen der sich überlappenden Projektionen entsprechen. Es sind aber auch unzählige weitere Möglichkeiten der Prüfung des Überlappens denkbar. Sind die Projektionen z.B. ellipsenförmig, so kann der Abstand zwischen den jeweiligen Mittelpunkten oder geometrischen Schwerpunkte mit der halbierten Summe der jeweiligen größten Halbachsen verglichen werden und auf diese Weise sehr einfach ein Überlappen festgestellt werden, falls der Abstand kleiner als die Summe der halbierten Halbachsen ist.

Der potentielle Punzpunkt kann in einer Projektionsebene liegen, wobei bei dem Platzieren der Projektion die Projektion um einen Winkel 0° ≤ y ≤ 360° und/oder um einen Winkel 0° ≤ δ ≤ 90° gedreht platziert werden kann. Der Winkel γ kann in der Projektionsebene liegen. Der Winkel δ kann in einer Ebene senkrecht zu der Projektionsebene liegen. Es kann auch vorgesehen sein, bei dem Schritt des Platzierens der Projektion die Projektion gedreht um den Winkel γ und/oder um den Winkel δ auf Überlappen zu überprüfen. Der Wert des Winkels γ und/oder des Winkels δ kann durch einen Zufallsgenerator erzeugt werden und/oder der Wert des Winkels γ einem Teiler von 360 und/oder der Wert des Winkels δ einem Teiler von 90 entsprechen. In einer oder mehreren Ausführungsformen der Erfindung kann der Normalenvektor der Projektionsebene senkrecht auf dem Gitter stehen. Die Projektion kann bereits vor dem Überprüfen auf Überlappen gedreht sein. Damit sind Ausführungsformen möglich, bei denen nicht auf Überlappen geprüft wird und die Projektionen unter einem z.B. jeweils zufällig gewählten Winkel platziert werden.

Der Winkel γ und/oder der Winkel δ kann bei feststellen eines Überlappens variiert werden. Nach Variierung des Winkels γ und/oder des Winkels δ kann nochmals das Überlappen geprüft werden. Wird wiederum ein Überlappen festgestellt, kann der Winkel γ und/oder der Winkel δ nochmals - ggf. auch mehrmals - variiert werden. Wird nach der Variierung des Winkels kein Überlappen festgestellt, so kann die Projektion unter den variierten Winkeln γ und/oder δ platziert werden. Es kann vorgesehen sein, die maximale Anzahl durchgeführter Variationen zu begrenzen.

Es kann weiterhin vorgesehen sein, bei einem Überlappen anstelle oder zusätzlich zu der Winkelvariation einen Offset zwischen dem geometrischen Schwerpunkt oder dem anderen charakteristischen Punkt der Projektion und dem potentiellen Punzpunkt zu variieren. Die Variation des Offsets kann dabei zufällig oder in Inkrementen erfolgen. Der Offset kann im Wesentlichen in der Ebene senkrecht zum Gitter variiert werden. Nach einer Variation des Offsets kann analog zur Winkelvariation nochmals auf Überlappen geprüft werden. Jede Raumrichtung kann separat variiert werden. Es ist denkbar, dass der Offset auch mehrmals variiert werden kann, bis kein Überlappen mehr festgestellt wird. Die maximale Anzahl der Variation des Offsets kann dabei vorgegeben sein. Wird der Offset durch Inkremente variiert, kann das jeweilige Inkrement vorgegeben sein.

In einer weiteren erfindungsgemäßen Ausführungsform kann die maximale Anzahl durchgeführter Variationen des Winkels γ und/oder des Winkels δ einem vorgegebenen jeweiligen Zahlenwert entsprechen. Der jeweilige Winkelwert kann durch einen Zufallsgenerator jeweils neu bestimmt werden. Es kann aber auch jeweils beginnend von einem jeweils vorgegebenen Startwert der Wert des Winkels γ und/oder des Winkels δ bei jeder Variation um ein jeweils vorgegebenes Inkrement erhöht werden. Denkbar ist auch, dass das jeweilige Inkrement zufällig bestimmt wird.

Es kann vorgesehen sein, eine Projektion trotz fehlendem Überlapp erst dann zu platzieren, wenn alle oder eine vorgegebene Anzahl Variationen auf ein Überlappen geprüft wurden. Ist bei mehreren Projektionen kein Überlappen festgestellt worden, so kann vorgesehen sein, diejenige Variierung auszuwählen bzw. die zu platzierende Projektion unter denjenigen Variationsbedingungen zu platzieren, die ein oder mehrere weiteren Hilfskriterien erfüllt. Beispielsweise kann aus einer Menge von mehreren Variationen ohne Überlappen diejenige ausgewählt werden, deren Winkel γ und/oder δ der zu platzierenden Projektion sich von denjenigen Winkel γ und/oder δ der benachbarten, bereits platzierten Projektionen unter Berücksichtigung eines geeigneten Maßes am meisten unterscheidet. Alternativ oder zusätzlich kann als Hilfskriterium die Anzahl an Überdeckungen mit noch nicht der Punktewolke zugeordneten Knotenpunkte vorgesehen sein, z.B. diejenige Variierung ausgewählt werden, die die wenigsten noch nicht der Punktewolke zugeordneten Knotenpunkte überdeckt. Es kann auch vorgesehen sein, zufällig eine der mehreren aufgefundenen Variationen, für die kein Überlappen festgestellt wurde, auszuwählen.

Erfindungsgemäß kann bei Wiederholen der Schritte des Auswählens eines potentiellen Punzpunkts, des Platzierens der Projektion an dem potentiellen Punzpunkt und des Zuordnens des potentiellen Punzpunkts zu der Punktewolke bei dem Auswählen eines potentiellen Punzpunkts derjenige Knotenpunkt aus der Menge der noch nicht ausgewählten und/oder noch nicht der Punktewolke zugeordneten Knotenpunkte des Gitters als potentieller Punzpunkt ausgewählt werden, der den geringsten geometrischen Abstand zu dem ersten der Punktewolke zugeordneten potentiellen Punzpunkt, einem Referenzpunkt oder dem geometrischen Schwerpunkt der Punktwolke aufweist. Es kann auch derjenige Knotenpunkt aus der Menge der noch nicht ausgewählten und/oder noch nicht der Punktewolke zugeordneten Knotenpunkte des Gitters als potentieller Punzpunkt ausgewählt werden, dessen kürzester Abstand zu dem ersten der Punktewolke zugeordneten potentiellen Punzpunkt, einem Referenzpunkt oder dem geometrischen Schwerpunkt der Punktewolke entlang der Gitterkanten am geringsten ist.

Es kann vorgesehen sein, dass z.B. der geometrische Schwerpunkt der Punktewolke bei jedem Auswählen eines potentiellen Punzpunkts neu berechnet wird. Es kann aber auch vorgesehen sein, dass der geometrische Schwerpunkt der Punktewolke nicht bei jedem Auswählen eines potentiellen Punzpunkts, sondern abhängig von einer Bedingung neu berechnet wird. Wird der Abstand zu einem Referenzpunkt berechnet, so muss der Referenzpunkt nicht stets derselbe sein und/oder sich stationär an derselben Position befinden; es kann z.B. vorgesehen sein, dass der Referenzpunkt bewegt wird.

Es kann auch vorgesehen sein, denjenigen Knotenpunkt als potentiellen Punzpunkt auszuwählen, dessen Abstand zu dem letzten Punkt der Punktwolke (d.h. dem Punkt der vorherig platzierten Punzierung) am geringsten ist. Ebenso kann vorgesehen sein, denjenigen Knotenpunkt als potentiellen Punzpunkt auszuwählen, dessen Abstand zu dem vorherigen ausgewählten potentiellen Punzpunkt am geringsten ist. Die Abstandsbestimmung kann geometrisch, entlang der Kanten oder anhand einer geeigneten anderen Metrik bestimmt werden. Es kann auch ein zufälliger Knotenpunkt aus der Menge der noch nicht ausgewählten und/oder noch nicht der Punktewolke zugeordneten Knotenpunkte des Gitters als potentieller Punzpunkt ausgewählt werden.

Der ausgewählte Knotenpunkt kann einen vorgegebenen Mindestabstand zu dem ersten der Punktewolke zugeordneten potentiellen Punzpunkt, einem Referenzpunkt oder dem geometrischen Schwerpunkt der Punktewolke aufweisen oder einhalten müssen. Der vorgegebene Mindestabstand kann frei gewählt werden. Es kann aber auch vorgesehen sein, dass der Mindestabstand der mittleren Zellenabmessung oder einem Vielfachen davon entspricht.

Bei einer weiteren Ausführungsform können die Schritte des Auswählens eines potentiellen Punzpunkts, des Platzierens der Projektion an dem potentiellen Punzpunkt eines potentiellen Punzpunkts nochmals oder mehrmals durchgeführt werden und/oder das Erzeugen der Punktewolke nochmals oder mehrmals erfolgen. Ein solches nochmaliges Durchlaufen der Schritte kann insbesondere dann vorgesehen sein, wenn alle Knotenpunkte mindestens einmal ausgewählt worden sind oder eine Abbruchbedingung eingetreten ist. In diesem Falle können unter Umständen "Löcher" im Gitter nicht mit Projektionen versehen worden sein, die bei nochmaligem Durchführen der Schritte z.B. mit zufälligen anderen Winkelwerten durchaus platziert hätten werden können. Bei nochmaligem Durchlauf kann das Gitter angepasst werden. Selbstverständlich können die Schritte mit oder ohne die nachfolgend beschriebenen Variationen mehrfach hintereinander durchgeführt werden. So kann das Gitter angepasst, vergröbert oder verfeinert werden, und/oder die Knotenpunkte können verschoben werden. Damit können gegebenenfalls weitere Projektionen, bevorzugt ohne Überlappen, platziert werden. Ebenso kann eine andere Projektion der an dem jeweiligen Punkt der Punktewolke zu erzeugenden Punzierung verwendet werden. Statt beispielsweise einer elliptischen Projektion kann z.B. eine kreisförmige verwendet werden. Es kann aber auch die maximale Anzahl durchgeführter Variationen verändert oder erhöht und/oder das jeweilige Inkrement und/oder der Startwert der jeweilige Wert des Winkels γ und/oder des Winkels δ verändert werden. Ebenso ist denkbar, dass die Schritte nochmals ohne diese Änderungen durchgeführt werden, um beispielsweise lediglich das Platzieren der Projektionen mit neuen, zufällig gewählten Winkelwerten zu prüfen. Alternativ oder zusätzlich kann vorgesehen sein, dass bei dem Auswählen eines potentiellen Punzpunkts und/oder bei Überprüfung auf Überlappen die Orientierung der dem potentiellen Punzpunkt benachbart platzierten Projektionen variiert wird. Die platzierten Projektionen können derart variiert werden, dass sie nach der Variierung ggf. kein Überlappen mit anderen platzierten Projektionen aufweisen. Damit kann nach Variierung der benachbart platzierten Projektionen ggf. der potentielle Punzpunkt der Punktewolke zugeordnet werden und an dem potentiellen Punzpunkt eine Projektion platziert werden. Insbesondere können zur Variierung der Orientation der benachbart platzierten Projektionen diese gedreht werden, d.h. die jeweiligen Winkel γ und/oder δ verändert werden. Alternativ oder zusätzlich können die benachbart platzierten Projektionen auch verschoben werden.

Benachbart platzierte Projektionen eines potentiellen Punzpunkts können z.B. die an mit dem potentiellen Punzpunkt direkt über eine Kante des Gitters verbundenen Knotenpunkten platzierte Projektionen sein. Benachbart platzierte Projektionen können auch solche Projektionen sein, die bei einer Verschiebung um einen vorgegebenen Wert oder bei Drehung den potentiellen Punzpunkt überlappen können. Benachbart platzierte Projektionen können beispielsweise auch solche Projektionen sein, die an einem Knotenpunkt platziert worden sind, der einen vorgegebenen Abstand zu dem potentiellen Punzpunkt unterschreitet. Benachbart platzierte Projektionen können auch solche sein, für die bei dem Schritt des Platzierens der Projektionen ein Überlappen festgestellt wird.

Es kann vorgesehen sein, eine oder mehrere Vorzugsrichtungen bei der Auswahl der potentiellen Punzpunkte vorzugeben. Die Vorzugsrichtung kann z.B. einer Linie oder bzw. Vektor entsprechen, aber auch z.B. trichterförmig oder flächig sein. In diesem Falle werden beispielsweise bevorzugt diejenigen Knotenpunkte ausgewählt, die von einem oder mehreren Referenzpunkten aus in Vorzugsrichtung liegen.

Es kann vorgesehen sein, die Knotenpunkte des Gitters und/oder das geometrische Modell einem oder mehreren Bereichen zuzuordnen. Jeder Bereich kann eigene Paramater zur Durchführung des Erzeugens der Punktewolke aufweisen. Beispielsweise kann vorgesehen sein, die maximale Anzahl Variationen und/oder die Projektion in unterschiedlichen Bereichen unterschiedlich zu wählen. Es kann auch vorgesehen sein, dass Gitter in gewissen Bereichen gröber oder feiner auszugestalten oder zu adaptieren.

Bei dem Erzeugen der Steuerbefehle können die platzierten Projektionen verwendet werden, so dass die Orientierung und/oder Position der bei dem Ausführen der Punzbearbeitungsschritte mit der Vorrichtung erzeugten Punzierungen derjenigen der platzierten Projektionen entsprechen können. Insbesondere kann vorgesehen sein, dass der Winkel γ dem Winkel α und/oder der Winkel δ dem Winkel β entspricht.

Gemäß einem anderen Aspekt wird eine Vorrichtung für die Punzierung einer Oberfläche eines Werkstücks beschrieben, die einen Mehrachsroboter sowie einen Werkstückhalter aufweist und die dazu eingerichtet ist, eine Punzierung einer Oberfläche eines Werkstücks nach dem zuvor beschriebenen Verfahren zu erzeugen. Der Mehrachsroboter kann einen Endeffektor mit einem Schlagwerk aufweisen, das mindestens eine Punze antreibt, insbesondere anschlägt, wobei der Mehrachsroboter eine NC-Steuerung aufweist, die Steuerbefehle empfängt, über die für eine Vielzahl von Positionen auf einer Oberfläche eines Werkstücks jeweils mindestens ein Punzbearbeitungsschritt zugeordnet ist.

Die mindestens eine Punze kann pneumatisch angetrieben sein. Dabei können die Steuerbefehle für jede der Vielzahl Positionen einen pneumatischen Schlagdruck aufweisen. Die pneumatischen Schlagdrücke mindestens zweier Positionen können sich dabei voneinander unterscheiden. Das Schlagwerk kann ein pneumatisches Schlaggerät aufweisen. Die Tiefe der erzeugten Punzierungen kann über die Leistungsfähigkeit des pneumatischen Schlaggerätes, etwa über einstellbaren Luftdruck festgelegt werden. Eine erzeugte Punzierung auf der Oberfläche des Werkstücks kann eine Tiefe von beispielsweise 0,6 mm aufweist. Der Schlagdruck kann etwa so eingestellt sein, dass bei der vorgegebenen Geometrie des Punzmeißels ein ovaler Punzabdruck von 3,5 × 2,5 × 0,6 mm erzeugt wird, bei einer Toleranz von +/- 0,1 mm. Es können auf einen Durchmesser von 29 mm beispielsweise 60 +/-2 Punzierungen vorgesehen sein. Der pneumatische Schlagdruck kann über eine externe Druckregeleinheit eingestellt und/oder von einer externen Einheit vorgegeben werden. Es kann aber auch vorgesehen sein, dass der pneumatische Schlagdruck und/oder die Tiefe der Punzierung von dem Computersystem bei oder nach der Ausführung des Verfahrens bestimmt oder vorgegeben wird. Beispielsweise kann das Computersystem nach dem Platzieren der Projektion einer zu erzeugenden Punzierung den pneumatischen Schlagdruck und/oder die Tiefe der jeweiligen Punzierung vorgeben. Ist z.B. vorgesehen, dass der pneumatische Schlagdruck und/oder die Tiefe durch das Computersystem beispielsweise bei der Durchführung des Verfahrens vorgegeben wird, so kann der pneumatische Schlagdruck und/oder die Tiefe mindestens einer oder aller zu erzeugenden Punzierungen gemeinsam mit denjenigen Parametern oder Daten, die die zu erzeugenden Punzierungen definieren oder charakterisieren, hinterlegt oder abgespeichert werden. Beispielsweise kann ein geeignetes hierarchisches Datenformat verwendet werden. Es kann auch vorgesehen sein, den vorgegebenen pneumatischen Schlagdruck und/oder die Tiefe der Punzierung in einer oder mehreren separaten Dateien abzuspeichern. Ist vorgesehen, dass der pneumatische Schlagdruck und/oder die Tiefe der Punzierung durch das Computersystem vorgegeben wird, so können die jeweiligen Werte der Vorrichtung zum Punzieren zur Verfügung gestellt werden. Damit können die von dem Schlagwerk erzeugten Punzierungen im Wesentlichen eine von dem Computersystem vorgegebene Tiefe aufweisen oder der pneumatische Schlagdruck des Schlagwerks den von dem Computersystem vorgegebenen Werten entsprechen. Es kann vorgesehen sein, sämtliche von der Vorrichtung zur Punzierung für die Punzierung des Werkstücks benötigten Steuerbefehle bei oder nach der Durchführung des Verfahrens durch das Computersystem vorzugeben und/oder zu bestimmen.

Das geometrische Modell des Werkstücks kann beispielsweise als eine CAD-Datei bereitgestellt sein. Das geometrische Modell kann insbesondere die auf der Oberfläche des Werkstücks durch Punzierung herzustellende Oberflächenstruktur nicht aufweisen.

Weitere Einzelheiten der Erfindung anhand der nachstehenden Figuren erläutert. Dabei zeigt:
- Figur 1: beispielhaft und schematisch den Ablauf eines erfindungsgemäßen Verfahrens von der Bereitstellung des geometrischen Modells eines Werkstücks bis zur Erzeugung von Steuerbefehlen für eine Maschinensteuerung; und
- Figur 2: beispielhaft und schematisch den weiteren Ablauf eines erfindungsgemäßen Verfahrens nach der Bereitstellung der Steuerbefehle unter Verwendung einer erfindungsgemäßen Vorrichtung; Figur 3 beispielhaft und schematisch den Ablauf eines erfindungsgemäßen Erzeugens einer Punktewolke; und
- Figur 4: beispielhaft und schematisch den Ablauf eines weiteren erfindungsgemäßen Erzeugens einer Punktewolke; und
- Figur 5: beispielhaft ein Gitter mit Knotenpunkten, platzierten Projektionen, und potentiellen Punzpunkten; und
- Figur 6: beispielhaft Variationen der zu platzierenden Projektionen und bereits platzierten Projektionen.

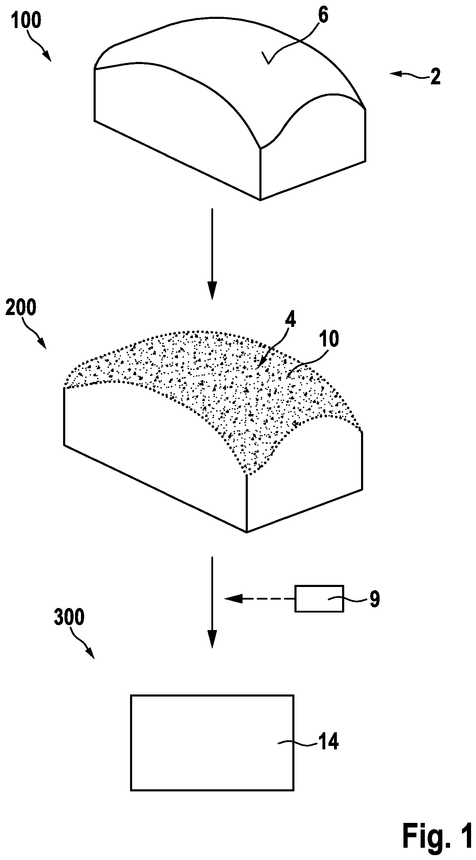

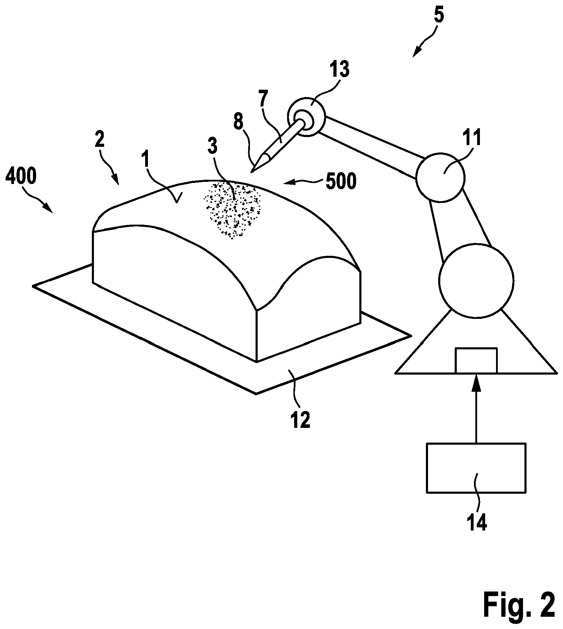

Bei der Ausführungsform eines erfindungsgemäßen computergestützten Verfahrens für die Punzierung einer Oberfläche 1 eines Werkstoffstücks 2, wie es in den Figuren 1 und 2 gezeigt ist, wird in einem ersten Schritt 100 in einem Computersystem ein geometrisches Modell des Werkstücks bereitgestellt, dass mindestens eine mit einer Vielzahl Punzierungen 3 zu versehende Oberfläche 1 aufweist. Das Modell kann in Form einer CAD-Datei (CAD = computer-aided design) oder dergleichen bereitgestellt sein.

In einem nachfolgenden Schritt 200 wird eine Punktewolke 4 mit dem Computersystem erzeugt, die eine Vielzahl Punkte 10 auf einer Fläche 6 des geometrischen Modells aufweist, die die mit der Vielzahl Punzierungen 3 zu versehende Oberfläche 1 des Werkstücks 2 repräsentiert. Dies kann umfassen, dass die Fläche 6 als eine Punktwolke dargestellt wird. Das Erstellen und Darstellen von Flächen anhand von Punktwolkendaten ist aus dem Stand der Technik hinreichend bekannt. Durch Variation der Detailgenauigkeit kann die Dichte der Punkte auf ein Maß eingestellt werden, das einer gewünschten Punzierungsdichte entspricht.

In einem folgenden Schritt 300 werden mit dem Computersystem Steuerbefehle für eine Maschinensteuerung, insbesondere eine NC-Steuerung 14 einer Vorrichtung zur Punzierung eines Werkstücks 2 erzeugt. Dabei wird jedem Punkt 10 der Vielzahl Punkte 10 auf der Fläche 6 des geometrischen Modells jeweils mindestens ein Punzbearbeitungsschritt zugeordnet. Die dabei erzeugten Maschinendaten können neben einer Zuordnung eines jeweiligen Punkts 10 des geometrischen Modells einer Position auf der Oberfläche des Werkstücks 2 auch weitere Prozessparameter der Punzierung umfassen, beispielsweise eine Schlaghärte, einen Anstellwinkel der Punze in Bezug auf die Normale zur Oberfläche des Werkstücks sowie einen Drehwinkel um die Längsachse der Punze.

Um eine möglichst willkürliche, das heißt unsystematische Punzierung der Oberfläche 1 des Werkstücks 2 zu erreichen, kann ein Zufallsgenerator 9 die Auswahl zumindest einiger Prozessparameter in einem vorgebbaren Wertebereich zufällig variieren.

Bei einer Ausführungsform der Erfindung kann vorgesehen sein, dass der Zufallsgenerator 9 dazu eingerichtet ist, für zumindest einen Teil der Punzbearbeitungsschritte einen Offset zufällig zu bestimmen, um welchen die Position auf der Oberfläche 1 des Werkstücks gegenüber dem korrespondierenden Punkt 10 auf der Fläche 6 des geometrischen Modells verlagert wird. Auch diese Maßnahme trägt dazu bei, dass die strukturierte Oberfläche 1 des Werkstücks 2 ein unregelmäßiges Erscheinungsbild aufweist.

In einem Schritt 400 wird ein Werkstück 2 entsprechend dem geometrischen Modell bereitgestellt, das die mit einer Vielzahl Punzierungen 3 zu versehende Oberfläche 1 aufweist. Es wird weiterhin eine Vorrichtung 5 zur Punzierung des Werkstücks 2 bereitgestellt. Die Vorrichtung 5 kann einen Mehrachsroboter 11 sowie einen Werkstückhalter 12 aufweisen, wobei der Mehrachsroboter 11 einen Endeffektor mit einem Schlagwerk 13 aufweist, das mindestens eine Punze 7 antreibt. Der Mehrachsroboter 11 kann eine NC-Steuerung 14 aufweisen, die Steuerbefehle empfängt, über die für eine Vielzahl von Positionen auf der Oberfläche 1 des Werkstücks 2 jeweils mindestens ein Punzbearbeitungsschritt zugeordnet ist.

Die mindestens eine Punze 7 kann pneumatisch angetrieben sein, wobei die Steuerbefehle für jede der Vielzahl Positionen auf der Oberfläche 1 des Werkstücks 2 einen pneumatischen Schlagdruck aufweisen können. Dabei können sich die pneumatischen Schlagdrücke mindestens zweier Positionen, insbesondere zweier benachbarter Positionen auf der Oberfläche 1 voneinander unterscheiden.

Schließlich umfasst das Verfahren das Ausführen 500 der Punzbearbeitungsschritte mit der Vorrichtung 5 an Positionen auf der Oberfläche 1 des Werkstücks 2, die jeweils einem der Punkte 10 der Vielzahl Punkte 10 auf der Fläche 6 des geometrischen Modells entsprechen, gegebenenfalls unter weitere Berücksichtigung des oben genannten Offsets.

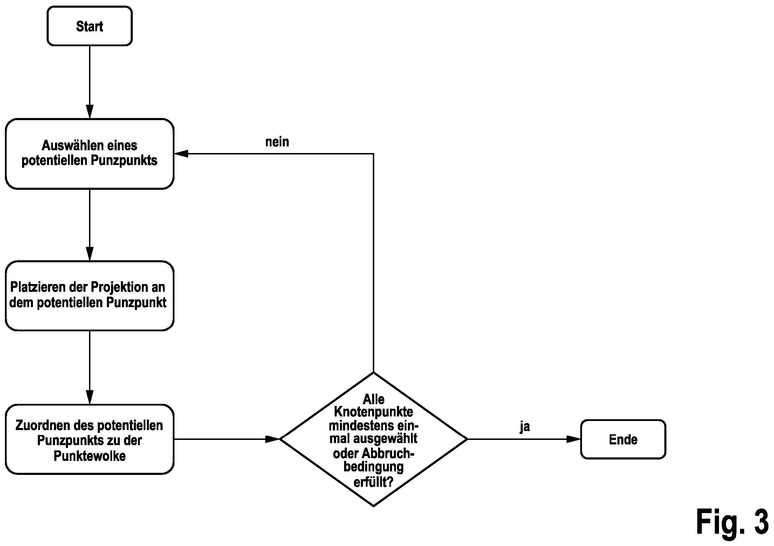

Die Figur 3 zeigt beispielsweise den Ablauf eines erfindungsgemäßen Erzeugens einer Punktewolke. Bei "Start" kann zunächst das Gitter erzeugt werden. Alternativ kann das Gitter von dem geometrischen Modell des Werkstücks 2, insbesondere einer zu punzierenden Oberfläche 1, übernommen oder adaptiert werden. Beispielsweise können die Knotenpunkte 150 des Gitters denjenigen der Fläche 6 des geometrischen Modells entsprechen. Danach wird ein erster Knotenpunkt 120 des Gitters ausgewählt. Dieser kann zufällig ausgewählt werden oder vorgegeben sein. An dem ausgewählten ersten Knotenpunkt 120 kann nun eine erste Projektion 130 platziert und der ausgewählte Knotenpunkt 120 der Punktewolke 4 als zugeordneter Knotenpunkt 140 zugeordnet werden. Die Platzierung kann derart erfolgen, dass der geometrische Schwerpunkt der Projektion 130 mit dem ausgewählten Knotenpunkt 120 übereinstimmt. Die Projektion 130 kann unter einem Winkel γ und/oder einem Winkel δ gedreht platziert werden. Danach wird ein weiterer potentieller Punzpunkt 120 ausgewählt. Dieser kann zufällig ausgewählt werden, vorgegeben sein oder demjenigen Punkt entsprechen, der den geringsten Abstand zum ersten Punkt der Punktewolke 4, d.h. dem zuerst ausgewählten Punkt, aufweist. Der Abstand kann beispielsweise als geometrischer Abstand oder entlang der Kanten 170 des Gitters bestimmt werden. Es kann vorgesehen sein, dass Knotenpunkte 140, die bereits der Punktewolke 4 zugeordnet worden sind und/oder an denen bereits Projektionen 110 platziert worden sind, nicht als potentielle Punzpunkte 120 ausgewählt werden können. An dem derart ausgewählten potentiellen Punzpunkt 120 kann nun eine weitere Projektion 130 platziert werden. Die Platzierung kann wiederum unter einem Winkel γ und/oder einem Winkel δ gedreht platziert werden, wobei diese Winkel andere Werte als diejenigen der vorherig platzierten Projektion 110 aufweisen können. Bei einigen Ausführungsformen können die Projektionen 130 so platziert werden, dass sie nach dem Platzieren weitere Knotenpunkte 150, an denen noch keine Projektion 110 platziert wurde, überdecken können. Die Schritte des Auswählens von potentiellen Punzpunkten, des Platzierens der Projektionen und des Zuordnens der potentiellen Punzpunkte zu der Punktewolke können wiederholt werden, bis entweder alle Knotenpunkte 150 mindestens einmal ausgewählt worden sind oder eine Abbruchbedingung erfüllt ist. Bei Wiederholung der Schritte kann eines oder mehrere der oben beschriebenen Auswahlkriterien verwendet werden.

Die Abbruchbedingung kann ein Abbruch- oder Stoppbefehl sein. Die Abbruchbedingung kann von einem externen Gerät oder weiteren Computersystem erzeugt und/oder kommuniziert werden. Die Abbruchbedingung kann während der Durchführung der Schritte laufend überprüft werden. Die Abbruchbedingung kann erfüllt sein, wenn weitere Kriterien erfüllt sind, beispielsweise ein Zeitlimit, eine maximale Anzahl von Wiederholungen der Schritte, oder sonstige Kriterien. Die Punktewolke 4 und/oder die platzierten Projektionen 110 können beispielsweise in einem Datenspeicher hinterlegt werden. Insbesondere können auch die Form der platzierten Projektionen 110 sowie deren Position und Drehwinkel γ und/oder δ hinterlegt werden. Die hinterlegten Daten können bei dem Erzeugen 300 von Steuerbefehlen oder bei nochmaligem Durchführen zur Optimierung der Punktewolke 4 und/oder der platzierten Projektionen 110 verwendet werden. Dadurch kann die von der Punze 7 erzeugte Punzierung 3 den platzierten Projektionen 110 entsprechen. Beispielsweise können die von der Punze 7 erzeugte Punzierung 3 des Werkstücks 2 die gleiche Position und/oder Orientierung, insbesondere gleiche Drehwinkel γ und/oder 8, wie die platzierten Projektionen 110 des geometrischen Modells aufweisen.

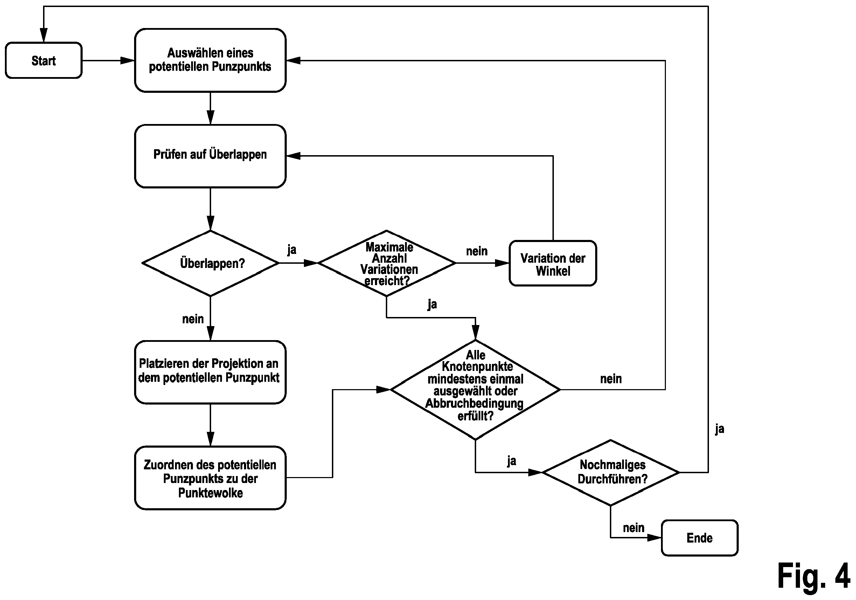

Figur 4 zeigt beispielsweise den Ablauf eines weiteren erfindungsgemäßen Erzeugens einer Punktewolke 4. Im Vergleich zu dem in Figur 3 gezeigten Ablauf wird zusätzlich nach dem Auswählen eines potentiellen Punzpunkts 120 die ggf. an dem potentiellen Punzpunkt 120 zu platzierende Projektion auf ein Überlappen 160 mit bereits platzierten Projektionen 110 überprüft. Wird ein Überlappen 160, beispielsweise anhand eines geeigneten Kriteriums (z.B. wie oben beschrieben) festgestellt, so kann die zu platzierende Projektion 130 variiert werden. Insbesondere kann die zu platzierende Projektion 130 durch Variation ihrer Ausrichtungswinkel γ und/oder δ gedreht werden, so dass sie gegebenenfalls nach einer Drehung ohne Überlappen 160 mit bereits platzierten Projektionen 110 platziert werden kann. Alternativ oder zusätzlich kann die zu platzierende und auf ein Überlappen zu prüfende Projektion 130 ohne Drehung versetzt werden, so dass sie gegebenenfalls unter einem Offset ohne Überlappen 160 mit bereits platzierten Projektionen 110 platziert werden kann. Alternativ oder zusätzlich können die bereits platzierten Projektionen 110 variiert, insbesondere gedreht oder versetzt werden, derart, dass sich die bereits platzierten Projektionen 110 nach der Variation nicht überlappen. Werden bereits platzierte Projektionen 110 variiert, so werden bevorzugt nur diejenigen variiert, die dem potentiellen Punzpunkt 120 benachbart sind.

Es können sich Konstellationen ergeben, nach denen ein Platzieren einer Projektion 130 ohne Überlappen 160 mit bereits platzierten Projektionen nicht möglich ist. Unter anderen deshalb kann die maximale Anzahl Winkel- oder Offsetvariationen der zu platzierenden Projektion 130 und/oder ggf. der bereits platzierten Projektionen 110 beschränkt sein. Ist die maximale Anzahl Variationen erreicht, so kann ein anderer potentieller Punzpunkt 120 ausgewählt und auf Überlappen 160 geprüft werden. Sind alle Knotenpunkte 150 mindestens einmal ausgewählt worden oder eine Abbruchbedingung erfüllt, kann das Erzeugen der Punktwolke beendet werden. Alternativ kann das Verfahren nochmals durchgeführt werden, um beispielsweise die erzeugte Punktewolke 4 zu optimieren oder nach Änderung der Parameter weitere Projektionen 110 zu platzieren.

Beim wiederholten "Start" kann das Gitter adaptiert werden. Insbesondere kann mindestens ein Knotenpunkt 150 zu dem Gitter hinzugefügt und/oder aus dem Gitter entfernt werden. Es kann vorgesehen sein, Knotenpunkte insbesondere in den flächenoder volumenmäßig größten Gitterzellen hinzuzufügen. Werden Knotenpunkte 150 entfernt, so kann vorgesehen sein, die an dem Knotenpunkt 140 gegebenenfalls platzierten Projektionen 110 gleichfalls zu entfernen. Es kann aber auch vorgesehen sein, nur solche Knotenpunkte 150 aus dem Gitter zu entfernen, die nicht der Punktewolke 4 zugeordnet wurden bzw. an denen keine Projektionen 110 platziert wurden. Alternativ oder zusätzlich kann vorgesehen sein, mindestens einen Knotenpunkt 150 zu verschieben. Es kann vorgesehen sein, dass bei Verschieben eines Knotenpunkts 140 eine dem Knotenpunkt zugeordnete platzierte Projektion 110 gleichermaßen verschoben wird. Es kann dann vorgesehen sein, Knotenpunkte 140, 150 nur derart zu verschieben, dass sich bereits platzierte Projektionen 110 nicht überlappen. Alternativ oder zusätzlich kann vorgesehen sein, mindestens eine platzierte Projektion 110 zu versetzen oder zu drehen. Wird eine platzierte Projektion 110 versetzt oder gedreht, so kann der Offset oder die Verdrehung derart gewählt sein, dass sich danach kein Überlappen 160 mit anderen bereits platzierten Projektionen 110 ergibt.

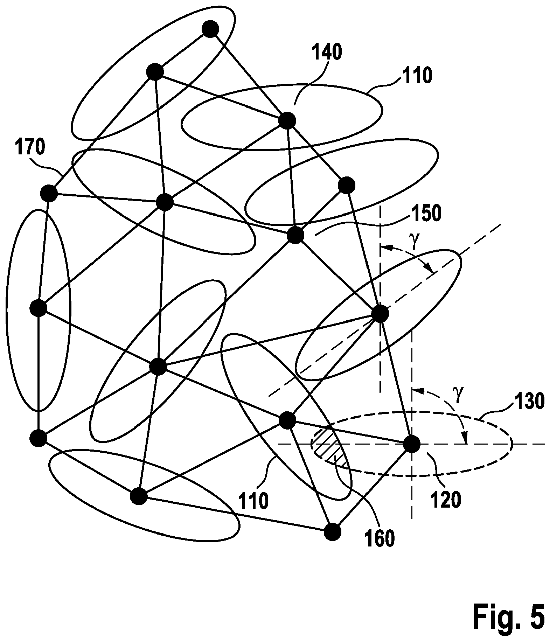

Figur 5 zeigt beispielsweise ein Gitter mit Knotenpunkten 150, platzierten Projektionen 110, der Punktewolke 4 zugeordneten Knotenpunkten 140, einem ausgewählten potentiellen Punzpunkt 120 und eine auf Überlappen 160 zu überprüfende, an dem ausgewählten potentiellen Punzpunkt 120 ggf. zu platzierende Projektion 130. Die platzierten Projektionen 110 sind unter einem jeweiligen Winkel γ und einem nicht gezeigten jeweiligen Winkel δ angeordnet, wobei der Winkel δ der Ebene senkrecht zur Figurenebene liegt. Die Form der in der Figur gezeigten Projektionen 110, 130 kann elliptisch oder ellipsoid sein. Die an dem ausgewählten potentiellen Punzpunkt 120 zu platzierende Projektion 130 überlappt mit einer bereits platzierten Projektion 110; die Überlappung 160 ist in der Figur schraffiert dargestellt. In einigen Ausführungsformen wird die zu platzierende Projektion 130 deshalb nicht unter ihrem in der Figur gezeigten Winkel γ platziert. In einigen Ausführungsformen wird die Position oder Orientierung, insbesondere die Winkel γ und/oder 8, der zu platzierenden Projektion 130 variiert und nach der Variation die zu platzierende Projektion 130 nochmals auf Überlappen 160 mit den platzierten Projektionen 110 überprüft. Die zu platzierende Projektion 130 kann mehrmals variiert und auf Überlappen 160 überprüft werden, wobei die maximale Anzahl Variationen beschränkt sein kann. Die zu platzierende Projektion 130 wird in einigen Ausführungsformen nur dann platziert, wenn kein Überlappen 160 festgestellt wird. Wird die maximale Anzahl Variationen erreicht, so kann vorgesehen sein, die zu platzierende Projektion 130 nicht zu platzieren und/oder den ausgewählten potentiellen Punzpunkt 120 nicht der Punktewolke 4 zuzuordnen und einen anderen Knotenpunkt 150 als potentiellen Punzpunkt 120 auszuwählen, wobei der neu ausgewählte potentielle Punzpunkt 120 keinem der Punktewolke 4 bereits zugeordneten Knotenpunkt 140 entspricht. In einigen anderen Ausführungsformen kann aber auch vorgesehen sein, dass nach Erreichen der maximalen Anzahl Variationen trotz Überlappen 160 die zu platzierende Projektion 130 platziert und der ausgewählte potentielle Punzpunkt 120 der Punktewolke 4 zugeordnet wird. In einigen weiteren Ausführungsformen kann vorgesehen sein, dass die zu platzierende Projektion 130 unter einem zufälligen Winkel γ und/oder δ an dem potentiellen Punzpunkt 120 platziert und/oder der ausgewählte potentielle Punzpunkt 120 der Punktewolke 4 zugeordnet wird, ohne die zu platzierende Projektion 130 auf Überlappen 160 zu überprüfen. Wie in Figur 5 dargestellt kann eine bereits platzierte Projektion 110 mindestens einen weiteren Knotenpunkt 150 überdecken. Es kann vorgesehen sein, derart überdeckte Knotenpunkte 150 bei der Auswahl potentieller Punzpunkte nicht zu berücksichtigen, auch wenn der überdeckten Knotenpunkte 150 noch nicht der Punktewolke 4 zugeordnet ist. Die in Figur 5 dargestellten Projektionen 110, 130 sind derart angeordnet, dass ihr geometrischer Mittelpunkt mit den ihnen zugeordneten Knotenpunkten 120, 140 des Gitters zusammenfällt. Es kann aber auch vorgesehen sein, die Projektionen 110, 130 derart anzuordnen, dass ein anderer charakteristischer Punkt der jeweiligen Projektion 110, 130 mit den jeweiligen Knotenpunkten 120, 140 zusammenfällt. Der andere charakteristische Punkt kann beispielsweise ein Mittelpunkt, ein Fokalpunkt, oder ein Schnittpunkt von Winkelhalbierenden oder Mittelsenkrechten sein. Es kann auch vorgesehen sein, dass der jeweilige charakteristische Punkt, insbesondere der geometrische Schwerpunkt, zu dem jeweils ihm zugeordneten Knotenpunkt 120, 140 versetzt ist. Es kann vorgesehen sein, dass die zu platzierende Projektion 130 unter einem zufälligen oder zumindest sich veränderndem Winkel γ und/oder δ und/oder Offset zum potentiellen Punzpunkt 120 erstmals auf Überlappen 160 überprüft wird oder platziert wird. Damit kann vermieden werden, dass bereits nach erstmaligem Überprüfen auf Überlappen 160 platzierte Projektionen 110 zueinander Regelmäßigkeiten, insbesondere hinsichtlich ihrer Winkel γ und/oder δ, aufweisen. Gleichermaßen können Regelmäßigkeiten vermieden werden, wenn die zu platzierenden Projektionen 110 ohne Prüfung auf Überlappen 160 platziert werden.

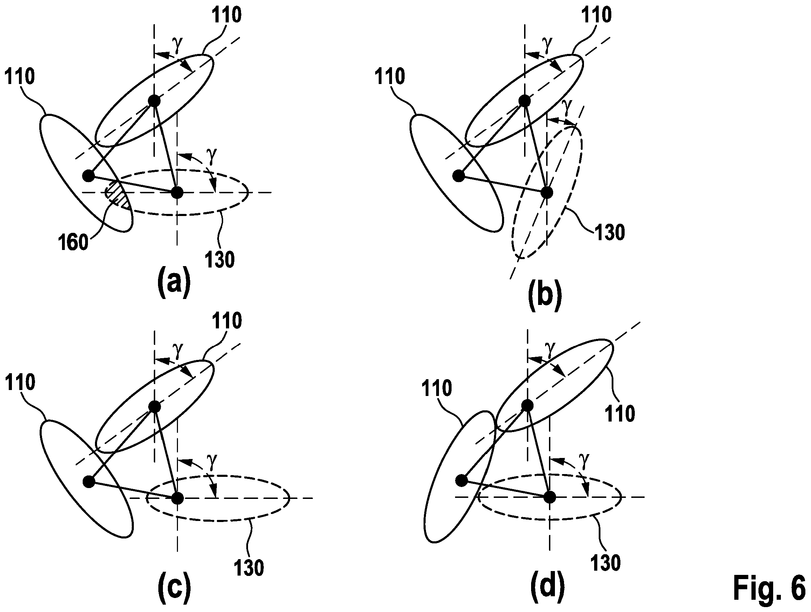

Figur 6 zeigt beispielhafte Variationen bei Überprüfung auf Überlappen 160. Figur 6 (a) zeigt beispielhaft eine an einem potentiellen Punzpunkt zu platzierende Projektion 130, die mit bereits platzierten Projektionen 110 in der in Figur 6 (a) gezeigten Anordnung überlappt, wobei die Überlappung 160 schraffiert dargestellt ist. Die in Figur 6 (b) beispielhaft gezeigte Anordnung unterscheidet sich von derjenigen der Figur 6 (a) lediglich darin, dass die zu platzierende Projektion 130 in der Figurenebene gedreht wurde, d.h. der Winkel γ variiert wurde. Wie aus Figur 6 (b) ersichtlich, überlappt die zu platzierende Projektion 130 nach der Winkelvariation nicht mehr mit den bereits platzierten Projektionen 110. In einigen Ausführungsformen kann nun die zu platzierende Projektion 130 platziert, der ausgewählte potentielle Punzpunkt der Punktewolke 4 zugeordnet und ein neuer potentieller Punzpunkt ausgewählt werden. Figur 6 (c) zeigt eine weitere beispielhafte Variationsmöglichkeit der zu platzierenden Projektion 130. Die in Figur 6 (c) gezeigte Anordnung unterscheidet sich von derjenigen der Figur 6 (a) lediglich darin, dass die zu platzierende Projektion 130 in der Figurenebene verschoben wurde, d.h. der charakteristische Punkt relativ zu dem ausgewählten potentiellen Punzpunkt angeordnet bzw. bestimmt ist. Wie aus Figur 6 (c) ersichtlich, überlappt die zu platzierende Projektion 130 nach der Offsetvariation nicht mehr mit den bereits platzierten Projektionen 110, In einigen Ausführungsformen kann nun die zu platzierende Projektion 130 platziert, der ausgewählte potentielle Punzpunkt der Punktewolke 4 zugeordnet und ein neuer potentieller Punzpunkt ausgewählt werden. Figur 6 (d) zeigt eine weitere beispielhafte Variationsmöglichkeit, wobei anstelle der zu platzierenden Projektion 130 die bereits platzierten Projektionen 110 variiert wurden. Die bereits platzierten Projektionen wurden dabei derart variiert, dass sie sich nach der Variierung nicht überlappen. In dem in Figur 6 (d) gezeigten Beispiel wurde dazu die eine bereits platzierte Projektion 110 gedreht und die andere versetzt. Wie aus Figur 6 (d) ersichtlich, überlappt die zu platzierende Projektion 130 nach der Variierung nicht mehr mit den bereits platzierten Projektionen 110. In einigen Ausführungsformen kann nun die zu platzierende Projektion 130 platziert, die variierten Positionen und/oder Orientierung der bereits platzierten Projektion 130 gespeichert, der ausgewählte potentielle Punzpunkt der Punktewolke 4 zugeordnet und ein neuer potentieller Punzpunkt ausgewählt werden. Selbstverständlich sind auch beliebige Kombinationen der Variierungen möglich.

Das Erzeugen der Punktewolke kann durch ein Computersystem erfolgen. Das Computersystem kann ein Desktop Computer, ein Personal Computer, ein Laptop, eine Workstation, ein Smartphone, ein Tablet, ein Server, eine Steuereinheit oder ein Regler, ein Mikrocontroller oder jedes andere System, das zum Ausführen von Computerbefehlen geeignet ist, sein. Das Computersystem kann mobil oder stationär sein. Es ist auch denkbar, dass Teile des Verfahrens von unterschiedlichen Computersystemen ausgeführt werden. Das Computersystem kann einen oder mehrere Prozessoren und/oder Threads aufweisen. Das Verfahren, insbesondere das Erzeugen der Punktewolke, kann parallelisiert sein. Damit können mehrere Prozessoren oder Threads gleichzeitig das Verfahren durchführen bzw. einen Teil des Verfahrens durchführen. Beispielsweise kann bei dem Erzeugen der Punktewolke ein erster Prozessor und/oder ein erster Thread für einen ersten Teilbereich des geometrischen Modells eine Punktewolke erzeugen und ggf. das Platzieren von Projektionen durchführen, während ein zweiter Prozessor und/oder ein zweiter Thread für einen zweiten Teilbereich des geometrischen Modells eine Punktewolke erzeugen und ggf. das Platzieren von Projektionen durchführen ausführen kann. In einem besonders einfachen Ausführungsbeispiel kann in einem ersten Schritt jeder Prozessor oder Thread nur in dem ihm zugeordneten Bereich des geometrischen Modells die Punktewolke erzeugen und ggf. die Projektionen platzieren, wobei sich die jeweiligen Bereiche nicht überlappen, d.h. unabhängig von den übrigen Prozessoren oder Threads. Damit müssen die Prozessoren und/oder Threads nicht miteinander kommunizieren oder Daten austauschen. In einem zweiten Schritt können dann der oder die Übergangsbereiche oder Zwischenbereiche zwischen den den jeweiligen Prozessoren und/oder Threads zugeordneten Bereichen überprüft werden, d.h. in den Übergangs- oder Zwischenbereichen die Punktewolke erzeugt und ggf. Projektionen platziert und/oder optimiert werden. Sind mehrere Vorzugsrichtungen vorgegeben, so kann vorgesehen sein, jedem Prozessor und/oder Thread eine oder mehrere Vorzugsrichtungen zuzuordnen. Selbstverständlich kann das Verfahren, insbesondere das Erzeugen der Punktewolke, auch anders parallelisiert werden.

### Bezugszeichenliste:

- 1: Oberfläche
- 2: Werkstück
- 3: Punzierung
- 4: Punktewolke
- 5: Vorrichtung
- 6: Fläche
- 7: Punze
- 8: Ende
- 9: Zufallsgenerator
- 10: Punkt
- 11: Mehrachsroboter
- 12: Werkstückhalter
- 13: Schlagwerk
- 14: NC-Steuerung
- 100: Bereitstellen eines geometrischen Modells
- 200: Erzeugen einer Punktwolke
- 110: platzierte Projektion
- 120: ausgewählter potentieller Punzpunkt
- 130: zu platzierende Projektion
- 140: der Punktewolke zugeordneter Knotenpunkt
- 150: Knotenpunkt
- 160: Überlappung
- 170: Kanten
- 300: Erzeugen von Steuerbefehlen
- 400: Bereitstellen eines Werkstücks
- 500: Ausführen des Punzbearbeitungsschritte
- α: Drehwinkel
- β: Kippwinkel
- γ: Drehwinkel der Projektion
- δ: Kippwinkel der Projektion

## Patentansprüche

1. Computergestütztes Verfahren für die Punzierung einer Oberfläche (1) eines Werkstücks (2), das die Schritte aufweist:
- Bereitstellen (100) eines geometrischen Modells eines Werkstücks (2), das mindestens eine mit einer Vielzahl Punzierungen (3) zu versehende Oberfläche (1) aufweist, in einem Computersystem;
- Erzeugen (200) einer Punktewolke (4) mit dem Computersystem, die eine Vielzahl Punkte (10) auf einer Fläche (6) des geometrischen Modells aufweist, die die mit der Vielzahl Punzierungen (3) zu versehende Oberfläche (1) des Werkstücks (2) repräsentiert;
- Erzeugen (300) von Steuerbefehlen mit dem Computersystem für eine NC-Steuerung (14) einer Vorrichtung (5) zur Punzierung eines Werkstücks (2), wobei jedem Punkt (10) der Vielzahl Punkte (10) auf der Fläche (6) des geometrischen Modells jeweils mindestens ein Punzbearbeitungsschritt zugeordnet wird;
- Bereitstellen (400) eines Werkstücks (2) entsprechend dem geometrischen Modell, das die mit einer Vielzahl Punzierungen (3) zu versehende Oberfläche (1) aufweist, sowie einer Vorrichtung (5) zur Punzierung des Werkstücks (2); und
- Ausführen (500) der Punzbearbeitungsschritte mit der Vorrichtung (5) an Positionen auf der Oberfläche (1) des Werkstücks (2), die jeweils einem der Punkte (10) der Vielzahl Punkte (10) auf der Fläche (6) des geometrischen Modells entsprechen,
wobei das Erzeugen (200) einer Punktewolke (4) folgende Schritte aufweist:
a) Auswählen eines potentiellen Punzpunkts (120), der einem noch nicht der Punktewolke (4) zugeordneten Knotenpunkt (150) eines Gitters entspricht, das an mindestens einer Außenseite der Fläche (6) des geometrischen Modells angeordnet ist;
b) Platzieren einer Projektion (130) an dem potentiellen Punzpunkt (120), so dass der potentielle Punzpunkt (120) mit einem charakteristischen Punkt der Projektion zusammenfällt oder relativ zu diesem angeordnet bestimmt ist, wobei die Projektion (130) einer mit der Vorrichtung (5) zu erzeugenden Punzierung (3) entspricht;
c) Zuordnen des potentiellen Punzpunkts (120) zu der Punktewolke (4);
d) Wiederholen der Schritte a) bis c), bis entweder alle Knotenpunkte (150) des Gitters mindestens einmal ausgewählt worden sind oder eine Abbruchbedingung erfüllt ist.

2. Verfahren nach Anspruch 1, bei dem das Ausführen (500) der Punzbearbeitungsschritte jeweils das Punzieren des Werkstücks (2) mit mindestens einer Punze (7) aufweist.

3. Verfahren nach Anspruch 1 oder 2, bei dem zumindest eine Mehrzahl der Punzbearbeitungsschritte mit derselben Punze (7) durchgeführt werden, deren das Werkstück (2) bearbeitendes Ende (8) im Querschnitt senkrecht zur Längsrichtung der Punze (7) eine von der Kreissymmetrie abweichende Geometrie, vorzugsweise eine Ovalität aufweist.

4. Verfahren nach Anspruch 2 oder 3, bei dem die Punze (7) für jede der Positionen auf der Oberfläche (1) des Werkstücks (2) vor dem Punzieren auf jeweils einen bestimmen Drehwinkel (a) um die Längsachse der Punze (7) mit o° ≤ α≤ 360° eingestellt wird, wobei vorzugsweise das Computersystem einen Zufallsgenerator (9) aufweist, der zumindest für eine Mehrzahl der Vielzahl Punkte (10) jeweils eine Zufallszahl zwischen o und 360 erzeugt, die als der Drehwinkel (a) um die Längsachse der Punze (7) festgesetzt wird, wobei vorzugsweise der jeweilige Drehwinkel (a) für jeden der Mehrzahl Punkte (10) in den erzeugten Steuerbefehlen hinterlegt wird.

5. Verfahren nach einem der Ansprüche 2 bis 4, bei dem die Punze (7) unter einem Winkel (β) mit o° ≤ β≤ 89° zu der Normalen der Oberfläche (1) in das Werkstück (2) geschlagen wird, wobei das Computersystem einen Zufallsgenerator (9) aufweist, der zumindest für eine Mehrzahl der Vielzahl Punkte (10) jeweils eine Zufallszahl zwischen o und 89 erzeugt, die als der Winkel (β) für jeden der Mehrzahl Punkte (10) in den erzeugten Steuerbefehlen hinterlegt wird.

6. Verfahren nach einem der vorangegangen Ansprüche, bei dem das Ausführen (500) der Punzbearbeitungsschritte das Punzieren des Werkstücks (2) mit mindestens zwei Punzen (7) aufweist, deren das Werkstück (2) bearbeitende Enden (8) sich im Querschnitt senkrecht zur Längsrichtung der Punze (7) voneinander unterscheiden, wobei vorzugsweise das Punzieren des Werkstücks (2) für jede der Positionen auf der Oberfläche (1) das Auswählen einer der mindestens zwei Punzen (7) aufweist, wozu das Computersystem vorzugsweise einen Zufallsgenerator (9) aufweist, der für die den Positionen auf der Oberfläche (1) entsprechenden Punkte (10) auf der Oberfläche (1) des geometrischen Modells zufällig eine der beiden Punzen (7) auswählt, woraufhin vorzugsweise die jeweils getroffene Auswahl in den erzeugten Steuerbefehlen hinterlegt wird.

7. Verfahren nach einem der vorangegangenen Ansprüche, bei dem das Gitter entweder vor dem Schritt a) erzeugt wird oder zumindest teilweise dem geometrischen Modell entspricht.

8. Verfahren nach einem der vorangegangenen Ansprüche, wobei bei dem Platzieren der Projektion die zu platzierende Projektion (130) auf ein Überlappen (160) mit bereits vorher platzierten Projektionen (110) überprüft wird und in dem Schritt b) die zu platzierende Projektion (130) nur dann an dem potentiellen Punzpunkt (120) platziert und in dem Schritt c) der potentielle Punzpunkt (120) nur dann der Punktewolke (4) zugeordnet wird, wenn kein Überlappen (160) festgestellt wird, wobei vorzugsweise das Überlappen (160) durch Schnittmengenbildung der jeweiligen Projektionen (110, 130) überprüft wird.

9. Verfahren nach einem der vorangegangenen Ansprüche, bei dem der potentielle Punzpunkt (120) in einer Projektionsebene liegt und bei dem Platzieren der Projektion die Projektion (130) um einen Winkel o° ≤ γ ≤ 360° und/oder um einen Winkel o° ≤ δ ≤ 90° gedreht platziert oder auf Überlappen (160) geprüft wird, wobei der Winkel γ in der Projektionsebene und der Winkel δ in einer Ebene senkrecht zu der Projektionsebene liegt, wobei vorzugsweise der Wert des Winkels γ und/oder des Winkels δ durch einen Zufallsgenerator erzeugt wird und/oder vorzugsweise der Wert des Winkels γ einem Teiler von 360 und/oder der Wert des Winkels δ einem Teiler von 90 entspricht.

10. Verfahren nach Anspruch 9 soweit sich dieser auf Anspruch 8 bezieht, wobei der Winkel γ und/oder der Winkel δ bei Feststellen eines Überlappens (160) variiert wird und nach Variierung des Winkels γ und/oder des Winkels δ nochmals auf Überlappen (160) geprüft wird, wobei vorzugsweise entweder
I) die maximale Anzahl durchgeführter Variationen des Winkels γ und/oder des Winkels δ einem vorgegebenen jeweiligen Zahlenwert entsprechen, wobei der jeweilige Winkelwert durch einen Zufallsgenerator jeweils neu bestimmt wird, oder
II) jeweils beginnend von einem jeweils vorgegebenen Startwert der Wert des Winkels γ und/oder des Winkels δ bei jeder Variation um ein jeweils vorgegebenes Inkrement erhöht wird.

11. Verfahren nach einem der vorangegangenen Ansprüche, bei dem beim Wiederholen der Schritte a) - c) in Schritt a) derjenige Knotenpunkt (150) aus der Menge der noch nicht ausgewählten und/oder noch nicht der Punktewolke (4) zugeordneten Knotenpunkte (140) des Gitters als potentieller Punzpunkt (120) ausgewählt wird, der entweder
I. den geringsten geometrischen Abstand zu dem ersten der Punktewolke (4) zugeordneten potentiellen Punzpunkt, einem Referenzpunkt oder dem geometrischen Schwerpunkt der Punktwolke (4) aufweist oder
II. dessen kürzester Abstand zu dem ersten der Punktewolke (4) zugeordneten potentiellen Punzpunkt, einem Referenzpunkt oder dem geometrischen Schwerpunkt der Punktewolke (4) entlang der Gitterkanten (170) am geringsten ist, oder
III. zufällig bestimmt wird,
und/oder einen vorgegebenen Mindestabstand zu dem ersten der Punktewolke (4) zugeordneten potentiellen Punzpunkt, einem Referenzpunkt oder dem geometrischen Schwerpunkt der Punktewolke (4) aufweist.

12. Verfahren nach einem der vorangegangenen Ansprüche, bei dem nach Schritt d) die Schritte a) - d) nochmals durchgeführt werden, wobei entweder
I) das Gitter angepasst wird, und/oder
II) eine andere Projektion (130) der an dem jeweiligen Punkt der Punktewolke (4) zu erzeugenden Punzierung (3) verwendet wird, und/oder
III) im Falle der Durchführung des Verfahrens nach Anspruch 17 die maximale Anzahl durchgeführter Variationen verändert oder erhöht oder das jeweilige Inkrement oder der Startwert der jeweilige Wert des Winkels γ und/oder des Winkels δ verändert wird, und/oder
IV) in dem Schritt des Auswählens eines potentiellen Punzpunkts (120) die Orientierung der dem potentiellen Punzpunkt benachbart platzierten Projektionen (110) variiert wird, wobei die platzierten Projektionen (110) nach der Variierung kein Überlappen (160) mit anderen platzierten Projektionen (110) aufweisen, oder
V) keine Änderungen nach I) - IV) dieses Anspruchs durchgeführt werden.

13. Verfahren nach einem der vorangegangenen Ansprüche, bei dem die platzierten Projektionen (110) bei dem Erzeugen (300) der Steuerbefehle verwendet werden, so dass die Orientierung und/oder Position der bei dem Ausführen (500) der Punzbearbeitungsschritte mit der Vorrichtung erzeugten Punzierungen (3) derjenigen der platzierten Projektionen (110) entspricht.

14. Vorrichtung (5) für die Punzierung einer Oberfläche (1) eines Werkstücks (2), die einen Mehrachsroboter (11) sowie einen Werkstückhalter (12) aufweist, wobei der Mehrachsroboter (11) einen Endeffektor mit einem Schlagwerk (13) aufweist, das mindestens eine Punze (7) antreibt, wobei der Mehrachsroboter (11) eine NC-Steuerung (14) aufweist, die Steuerbefehle empfängt, über die für eine Vielzahl von Positionen auf einer Oberfläche (1) eines Werkstücks (2) jeweils mindestens ein Punzbearbeitungsschritt zugeordnet ist, wobei die Vorrichtung (5) dazu eingerichtet ist, eine Punzierung (3) einer Oberfläche (1) eines Werkstücks (2) nach einem der Verfahren der Ansprüche 1 bis 13 zu erzeugen.

15. Vorrichtung (5) nach Anspruch 14, bei der die mindestens eine Punze (7) pneumatisch angetrieben ist, wobei die Steuerbefehle für jede der Vielzahl Positionen einen pneumatischen Schlagdruck aufweisen, und wobei sich die pneumatischen Schlagdrücke mindestens zweier Positionen voneinander unterscheiden.

## Claims

1. A computer-implemented method for hallmarking a surface (1) of a workpiece (2), comprising the steps of:
- Providing (100) in a computer system a geometric model of a workpiece (2) having at least one surface (1) to be provided with a plurality of hallmarks (3);
- Generating (200) with the computer system a point cloud (4) having a plurality of points (10) on a surface (6) of the geometric model representing the surface (1) of the workpiece (2) to be provided with the plurality of hallmarks (3);
- Generating (300) control commands with the computer system for an NC control (14) of a device (5) for hallmarking a workpiece (2), wherein each point (10) of the plurality of points (10) on the surface (6) of the geometric model is assigned at least one hallmarking processing step;
- Providing (400) a workpiece (2) corresponding to the geometric model having the surface (1) to be provided with a plurality of hallmarks (3), and a device (5) for hallmarking the workpiece (2); and
- Performing (500) the hallmarking machining steps with the apparatus (5) at positions on the surface (1) of the workpiece (2) each corresponding to one of the points (10) of the plurality of points (10) on the surface (6) of the geometric model,
wherein generating (200) a point cloud (4) comprises the steps of:
a) Selecting a potential hallmarking point (120) corresponding to a node point (150), not yet associated with the point cloud (4), of a grid arranged on at least one outer side of the surface (6) of the geometric model;
b) Placing a projection (130) at the potential hallmarking point (120) so that the potential hallmarking point (120) coincides with or is determined to be located relative to a characteristic point of the projection, the projection (130) corresponding to a hallmarking (3) to be produced by the apparatus (5);
c) Assigning the potential hallmarking point (120) to the point cloud (4);
d) Repeating steps a) to c) until either all nodes (150) of the grid have been selected at least once or a termination condition is met.

2. The method of claim 1, wherein performing (500) the hallmarking processing steps each comprises hallmarking the workpiece (2) with at least one punch (7).

3. The method according to claim 1 or 2, wherein at least a plurality of the hallmarking machining steps are carried out with the same punch (7), the end (8) of which machining the workpiece (2) has a geometry deviating from circular symmetry, preferably an ovality, in cross-section perpendicular to the longitudinal direction of the punch (7).

4. The method according to claim 2 or 3, wherein the punch (7) for each of the positions on the surface (1) of the workpiece (2) is set, prior to punching, to a respective determined angle of rotation (a) about the longitudinal axis of the punch (7) of o° < α≤ 360°, preferably the computer system comprising a random number generator (9) which generates, at least for a plurality of said plurality of points (10), a respective random number between o and 360, which is set as said angle of rotation (a) about said longitudinal axis of said punch (7), wherein preferably said respective angle of rotation (a) for each of said plurality of points (10) is stored in said generated control commands..

5. The method of any one of claims 2 to 4, wherein the punch (7) is struck into the workpiece (2) at an angle (β) of o° ≤ β≤ 89° to the normal of the surface (1), the computer system comprising a random number generator (9) that generates, at least for a plurality of the plurality of points (10), a random number between o and 89, respectively, which is stored as the angle (β) for each of the plurality of points (10) in the generated control commands.

6. A method according to any one of the preceding claims, wherein performing (500) the hallmarking processing steps comprises hallmarking the workpiece (2) with at least two punches (7) whose ends (8) processing the workpiece (2) differ from each other in cross-section perpendicular to the longitudinal direction of the punch (7), preferably hallmarking the workpiece (2) comprises selecting one of the at least two punches (7) for each of the positions on the surface (1), for which purpose the computer system preferably comprises a random generator (9) which randomly selects one of the two punches (7) for the points (10) corresponding to the positions on the surface (1) on the surface (1) of the geometric model, whereupon preferably the selection made in each case is stored in the generated control commands.

7. The method according to any one of the preceding claims, wherein the grid is either generated before step a) or corresponds at least partially to the geometric model.

8. The method according to any one of the preceding claims, wherein during the placement of the projection, the projection (130) to be placed is checked for an overlap (160) with previously placed projections (110) and in the step b) the projection (130) to be placed is placed at the potential hallmarking point (120) only and in the step c) the potential hallmarking point (120) is assigned to the point cloud (4) only, if no overlapping (160) is detected, wherein preferably the overlapping (160) is checked by intersection of the respective projections (110, 130\).

9. The method according to any one of the preceding claims, wherein the potential hallmarking point (120) is located in a projection plane and when placing the projection, the projection (130) is placed or checked for overlap (160) rotated by an angle o° ≤ γ ≤ 360° and/or by an angle o° ≤ δ ≤ 90°, wherein the angle γ lies in the projection plane and the angle δ lies in a plane perpendicular to the projection plane, wherein preferably the value of the angle γ and/or the angle δ is generated by a random generator and/or preferably the value of the angle γ corresponds to a divisor of 360 and/or the value of the angle δ corresponds to a divisor of 90.

10. The method according to claim 9 insofar as it relates to claim 8, wherein the angle γ and/or the angle δ is varied upon detecting an overlap (160) and, after varying the angle γ and/or the angle 8, is again checked for overlap (160), preferably either
I) the maximum number of variations of the angle γ and/or of the angle δ carried out corresponds to a predetermined respective numerical value, the respective angular value being determined anew in each case by a random generator, or
II) the value of the angle γ and/or of the angle δ is increased by a respective predetermined increment with each variation, starting from a respective predetermined starting value.

11. The method according to any one of the preceding claims, wherein, when repeating steps a)-c) in step a), the node (150) selected as a potential hallmarking point (120) from the set of nodes (140) of the grid not yet selected and/or not yet assigned to the point cloud (4) is the one that either
I. has the smallest geometric distance to the first potential hallmarking point assigned to the point cloud (4), a reference point or the geometric center of gravity of the point cloud (4) or
II. who has the shortest distance to the first potential hallmarking point associated with the point cloud (4), a reference point or the geometric center of gravity of the point cloud (4) along the grid edges (170) is the smallest, or
III. is determined randomly,
and/or has a predetermined minimum distance to the first potential hallmarking point associated with the point cloud (4), a reference point or the geometric center of gravity of the point cloud (4).

12. The method according to any one of the preceding claims, wherein after step d) steps a)-d) are performed again, wherein either
I) the grid is adjusted, and/or
II) a different projection (130) of the hallmarking (3) to be generated at the respective point of the point cloud (4) is used, and/or
III) in case of carrying out the method according to claim 17, the maximum number of variations carried out is changed or increased or the respective increment or the starting value of the respective value of the angle γ and/or the angle δ is changed, and/or
IV) in the step of selecting a potential hallmarking point (120), the orientation of the projections (110) placed adjacent to the potential hallmarking point is varied, the placed projections (110) having no overlap (160) with other placed projections (110) after the variation, or
V) no changes are made according to I) - IV) of this claim.

13. The method according to any one of the preceding claims, wherein the placed projections (110) are used in generating (300) the control commands so that the orientation and/or position of the hallmarks (3) generated when performing (500) the hallmark processing steps with the apparatus corresponds to that of the placed projections (110).

14. A device (5) for hallmarking a surface (1) of a workpiece (2), which has a multi-axis robot (11) and a workpiece holder (12), the multi-axis robot (11) having an end effector with a striking mechanism (13) which drives at least one punch (7), the multi-axis robot (11) having an NC control (14) which receives control commands via which at least one hallmarking processing step is assigned in each case for a plurality of positions on a surface (1) of a workpiece (2), the device (5) being set up to produce a hallmarking (3) of a surface (1) of a workpiece (2) according to one of the methods of claims 1 to 13.

15. The device (5) of claim 14, wherein the at least one punch (7) is pneumatically driven, wherein the control commands for each of the plurality of positions comprise a pneumatic impact pressure, and wherein the pneumatic impact pressures of at least two positions differ from each other.

## Revendications

1. Procédé assisté par ordinateur pour le poinçonnage d'une surface (1) d'une pièce (2), qui comprend les étapes suivantes :
- mise à disposition (100) d'un modèle géométrique d'une pièce (2), qui comprend au moins une surface (1) qui doit être munie d'une pluralité de poinçonnages (3), dans un système informatique ;
- génération (200) d'un nuage de points (4) avec le système informatique, qui comprend une pluralité de points (10) sur une surface (6) du modèle géométrique, qui représente la surface (1) de la pièce (2) qui doit être munie de la pluralité de poinçonnages (3) ;
- génération (300) d'instructions avec le système informatique pour une commande NC (14) d'un dispositif (5) pour le poinçonnage d'une pièce (2), dans lequel, à chaque point (10) de la pluralité de points (10) sur la surface (6) du modèle géométrique, correspond respectivement au moins une étape d'usinage par poinçonnage ;
- mise à disposition (400) d'une pièce (2) en fonction du modèle géométrique, qui comprend la surface (1) qui doit être munie avec une pluralité de poinçonnages (3), ainsi que d'un dispositif (5) pour le poinçonnage de la pièce (2) ; et
- exécution (500) des étapes d'usinage par poinçonnage avec le dispositif (5) au niveau de positions sur la surface (1) de la pièce (2), qui correspondent respectivement à un des points (10) de la pluralité de points (10) de la surface (6) du modèle géométrique,
dans lequel la génération (200) d'un nuage de points (4) comprend les étapes suivantes :
a) sélection d'un point de poinçonnage potentiel (120) qui correspond à un point nodal (150) d'une grille non encore attribué au nuage de points (4), qui est disposé au niveau d'au moins un côté externe de la surface (6) du modèle géométrique ;
b) placement d'une projection (130) au niveau du point de poinçonnage potentiel (120), de façon à ce que le point de poinçonnage potentiel (120) coïncide avec un point caractéristique de la projection ou soit déterminé de façon à être disposé par rapport à celui-ci, dans lequel la projection (130) correspond à un poinçonnage (3) à réaliser avec le dispositif (5) ;
c) attribution du point de poinçonnage potentiel (120) au nuage de points (4) ;
d) répétition des étapes a) à c), jusqu'à ce que soit tous les points nodaux (150) de la grille aient été sélectionnés au moins une fois soit jusqu'à ce qu'une condition d'interruption soit remplie.

2. Procédé selon la revendication 1, dans lequel l'exécution (500) des étapes d'usinage par poinçonnage comprend respectivement le poinçonnage de la pièce (2) avec au moins un poinçon (7).

3. Procédé selon la revendication 1 ou 2, dans lequel au moins une pluralité d'étapes d'usinage par poinçonnage sont exécutées avec le même poinçon (7), dont l'extrémité (8) usinant la pièce (2) présente, en section transversale perpendiculairement à la direction longitudinale du poinçon (7), une géométrie différente de la symétrie circulaire, de préférence une forme ovale.

4. Procédé selon la revendication 2 ou 3, dans lequel le poinçon (7) est réglé, pour chacune des positions sur la surface (1) de la pièce (2), avant le poinçonnage, à respectivement à un angle de rotation (α) déterminé autour de l'axe longitudinal du poinçon (7) avec 0° ≤ α ≤ 360°, dans lequel, de préférence, le système informatique comprend un générateur aléatoire (9) qui génère, au moins pour une pluralité de points (10), respectivement un nombre aléatoire entre 0 et 360, qui est défini comme l'angle de rotation (α) autour de l'axe longitudinal du poinçon (7), dans lequel, de préférence, l'angle de rotation (α) respectif est enregistré pour chacun de la pluralité de points (10) dans les instructions générées.

5. Procédé selon l'une des revendications 2 à 4, dans lequel le poinçon (7) est battu, avec un angle (β) avec 0° ≤ β ≤ 89° par rapport à la normale de la surface (1), dans la pièce (2), dans lequel le système informatique comprend un générateur aléatoire (9) qui génère, au moins pour une pluralité de points (10), respectivement un nombre aléatoire entre 0 et 89, qui est enregistré en tant que l'angle (β) pour chacun de la pluralité de points (10) dans les instructions générées.

6. Procédé selon l'une des revendications précédentes, dans lequel l'exécution (500) des étapes d'usinage par poinçonnage comprend le poinçonnage de la pièce (2) avec au moins deux poinçons (7), dont les extrémités (8) usinant la pièce (2) se distinguent entre elles dans la section transversale perpendiculaire à la direction longitudinale du poinçon (7), dans lequel, de préférence, le poinçonnage de la pièce (2) pour chacune des positions sur la surface (1) comprend la sélection d'un des au moins deux poinçons (7), le système informatique comprenant, pour cela, de préférence un générateur aléatoire (9) qui sélectionne, pour les points (10) de la surface (1) du modèle géométrique correspondant aux positions sur la surface (1), de manière aléatoire un des deux poinçons (7), de préférence la sélection effectuée étant ensuite enregistrée dans les instructions générées.

7. Procédé selon l'une des revendications précédentes, dans lequel la grille est soit générée avant l'étape a) soit correspond au moins partiellement au modèle géométrique.

8. Procédé selon l'une des revendications précédentes, dans lequel, lors du placement de la projection, la projection (130) à placer est contrôlée afin de détecter une superposition (160) avec des projections (110) déjà placées précédemment et, dans l'étape b), la projection (130) à placer n'est placée au niveau du point de poinçonnage potentiel (120) et, dans l'étape c), le point de poinçonnage potentiel (120) n'est attribué au nuage de points (4) que lorsqu'aucune superposition (160) n'est constatée, dans lequel, de préférence, la superposition (160) est contrôlée par la formation d'intersections des projections (110, 130) respectives.

9. Procédé selon l'une des revendications précédentes, dans lequel le point de poinçonnage potentiel (120) se trouve dans un plan de projection et, lors du placement de la projection, la projection (130) est placée de manière tournée d'un angle 0° ≤ γ ≤ 360° et/ou d'un angle 0° ≤ δ ≤ 90° ou est contrôlée afin de détecter une superposition (160), dans lequel l'angle γ se trouve dans le plan de projection et l'angle δ se trouve dans un plan perpendiculaire au plan de projection, dans lequel, de préférence la valeur de l'angle γ et/ou de l'angle δ est générée par un générateur aléatoire et/ou,de préférence, la valeur de l'angle γ correspond à un diviseur de 360 et/ou la valeur de l'angle δ correspond à un diviseur de 90.

10. Procédé selon la revendication 9, si celle-ci se réfère à la revendication 8, dans lequel l'angle γ et/ou l'angle δ est modifiée lors de la détection d'une superposition (160) et, après la modification de l'angle γ et/ou de l'angle δ, un contrôle de superposition (160) est effectué encore une fois, dans lequel de préférence soit
I) le nombre maximal de modifications effectuées de l'angle γ et/ou de l'angle δ correspond à une valeur numérique respective prédéterminée, dans lequel la valeur angulaire respective est déterminée à nouveau par un générateur aléatoire soit
II) en commençant par une valeur initiale respective prédéterminée, la valeur de l'angle γ et/ou de l'angle δ est augmentée, à chaque modification, d'un incrément prédéterminé.

11. Procédé selon l'une des revendications précédentes, dans lequel, lors de la répétition des étapes a) - c), dans l'étape a), le point nodal (150) sélectionné en tant que point de poinçonnage potentiel (120) parmi l'ensemble des points nodaux (140) de la grille non encore sélectionnés et/ou non encore attribués au nuage de points (4)
I. présente la distance géométrique la plus faible par rapport au premier point de poinçonnage potentiel attribué au nuage de points (4), à un point de référence ou au centre de gravité du nuage de points (4) ou
II. dont la distance la plus courte par rapport au premier point de poinçonnage potentiel attribué au nuage de points (4), à un point de référence ou au centre de gravité du nuage de points (4) est la plus faible le long des arêtes de la grille (170) ou
III. est déterminé de manière aléatoire,
et/ou présente une distance minimale prédéterminée par rapport au premier point de poinçonnage potentiel attribué au nuage de points (4), à un point de référence ou au centre de gravité géométrique du nuage de points (4).

12. Procédé selon l'une des revendications précédentes, dans lequel, après l'étape d), les étapes a) - d) sont exécutées encore une fois, dans lequel
I) la grille est adaptée et/ou
II) une autre projection (130) du poinçonnage (3) à générer au niveau du point respectif du nuage de points (4) est utilisée et/ou
III) dans le cas de l'exécution du procédé selon la revendication 17, le nombre maximal de modifications effectuées est modifié ou augmenté ou l'incrément respectif ou la valeur initiale de la valeur respective de l'angle γ et/ou de l'angle δ est modifié et/ou
IV) à l'étape de sélection d'un point de poinçonnage potentiel (120), l'orientation des projections (110) placées de manière adjacente au point de poinçonnage potentiel est modifiée, dans lequel les projections (110) placées ne présentent, après la modification, aucune superposition (160) avec d'autres projections (110) placées ou
V) aucune modification selon I) - IV) de cette revendication n'est effectuée.

13. Procédé selon l'une des revendications précédentes, dans lequel les projections placées (110) sont utilisées lors de la génération (300) des instructions de sorte que l'orientation et/ou la position des poinçonnages (3) générés avec le dispositif lors de l'exécution (500) des étapes d'usinage par poinçonnage correspond à celle des projections placées (110).

14. Dispositif (5) pour le poinçonnage d'une surface (1) d'une pièce (2), qui comprend un robot multi-axial (11) ainsi qu'un support de pièce (12), dans lequel le robot multi-axial (11) comprend un effecteur d'extrémité avec un mécanisme de percussion (13), qui entraîne l'au moins un poinçon (7), dans lequel le robot multi-axial (11) comprend une commande NC (14), qui reçoit des instructions, par l'intermédiaire de laquelle, à une pluralité de positions sur une surface (1) d'une pièce (2), est attribuée respectivement au moins une étape d'usinage par poinçonnage, dans lequel le dispositif (5) est conçu pour produire un poinçonnage (3) d'une surface (1) d'une pièce (2) selon l'un des procédés des revendications 1 à 13.

15. Dispositif (5) selon la revendication 14, dans lequel l'au moins un poinçon (7) est entraîné de manière pneumatique, dans lequel les instructions pour chacune de la pluralité de positions, une pression de percussion pneumatique et dans lequel les pressions de percussion pneumatiques d'au moins deux positions sont différentes entre elles.
